(19) Europäisches Patentamt
European Patent Office
Office européen des brevets

(11) **EP 3 835 756 B1**

(12) **FASCICULE DE BREVET EUROPEEN**

(45) Date de publication et mention
de la délivrance du brevet:
**20.07.2022 Bulletin 2022/29**

(21) Numéro de dépôt: **20212687.6**

(22) Date de dépôt: **09.12.2020**

(51) Classification Internationale des Brevets (IPC):
**G01N 15/14** *(2006.01)*   **G01N 15/06** *(2006.01)*
**G01N 21/35** *(2014.01)*   **G01N 21/85** *(2006.01)*
**G01N 21/94** *(2006.01)*

(52) Classification Coopérative des Brevets (CPC):
**G01N 15/1456; G01N 15/0612; G01N 15/1434;**
**G01N 21/35; G01N 21/453; G01N 21/8422;**
**G01N 21/94;** G01N 2015/0693; G01N 2015/1454

(54) **DISPOSITIF ET MÉTHODE DE DÉTECTION DE PARTICULES ET PROCÉDÉ DE FABRICATION**

VORRICHTUNG UND VERFAHREN ZUR PARTIKELDETEKTION UND VERFAHREN ZUR HERSTELLUNG

PARTICLE DETECTION DEVICE AND METHOD AND METHOD OF MANUFACTURING

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **13.12.2019 FR 1914428**

(43) Date de publication de la demande:
**16.06.2021 Bulletin 2021/24**

(73) Titulaire: **Commissariat à l'Energie Atomique et**
**aux Energies**
**Alternatives**
**75015 Paris (FR)**

(72) Inventeurs:
• **DUPOY, Mathieu**
  **38054 Grenoble Cedex 09 (FR)**
• **FREY, Laurent**
  **38054 Grenoble Cedex 09 (FR)**
• **GIDON, Serge**
  **38054 Grenoble Cedex 09 (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2007/119991   WO-A1-2009/057804**
**WO-A2-2011/014282   US-A- 5 949 532**

• **Laukkanen Janne: "Fabrication of metallic**
**micro-and nanostructures for optical solutions",**
**Dissertations in Forestry and Natural Sciences,**
**18 septembre 2015 (2015-09-18), XP055795201,**
**ISSN: 1798-5668 ISBN: 978-952-6101-78-1 Extrait**
**de l'Internet:**
**URL:https://www.researchgate.net/publicati**
**on/46406753_Fabrication_of_metallic_micro-**
**_and_nanostructures_for_optical_solutions**
• **Anonymous: "The Correct Material for Infrared**
**(IR) Applications", , 14 avril 2021 (2021-04-14),**
**XP055795205, Extrait de l'Internet:**
**URL:https://www.edmundoptics.eu/knowledge-**
**center/application-notes/optics/the-correc**
**t-material-for-infrared-applications/ [extrait le**
**2021-04-14]**

**Description**

Domaine technique :

La présente invention concerne le domaine de la détection de particules et plus particulièrement de la détection de particules par absorption infrarouge.

Technique antérieure :

Dans de nombreux domaines d'application comme l'agro-alimentaire, la défense ou la chimie, la détection et l'identification de particules sont nécessaires dans le but de donner l'alerte d'une éventuelle attaque ou contamination. De nombreuses techniques connues de l'homme de l'art permettent de déterminer une composition chimique d'un échantillon.

La spectroscopie infrarouge à transformée de Fourier (FTIR) est une technique analytique extrêmement répandue dans laquelle les molécules de l'échantillon absorbent le rayonnement incident modifiant ainsi leurs énergies de vibration. Selon les liaisons et les fonctions chimiques présentes dans l'échantillon, un spectre infrarouge (IR) caractéristique est obtenu.

Outre la spectroscopie FTIR, il existe une multitude de techniques permettant d'identifier des particules au sein d'un échantillon comme la spectrométrie Raman, la spectrométrie sur plasma induite par laser (LIBS), ou encore la méthode de photo-fragmentation induite par la fluorescence (PF-LIF), spécifique aux liaisons NO2.

Les techniques mettant en jeu l'absorption infrarouge peuvent être déclinées suivant plusieurs modalités :

- l'imagerie IR en transmission ou en rétrodiffusion, par absorption directe de la lumière par la particule. Dans ces méthodes, la puissance optique collectée diminue en présence de l'échantillon. Il est connu d'analyser un gaz généré par la décomposition de l'échantillon soumis à un laser intense pulsé en rétrodiffusion moyen infrarouge (MIR). Cette technique d'imagerie dite passive permet de détecter et d'identifier des nuages de gaz. Il n'est pas possible d'utiliser cette technique pour des objets de petites dimensions comme des particules puisque le chemin optique parcouru dans l'objet est trop petit.
- l'imagerie thermique active, par mesure de l'élévation de température de la particule soumise à un flux laser IR. La particule absorbe le rayonnement laser, le flux thermique collecté va augmenter. Cette technique est très dépendante du substrat où se trouve la particule. En effet, l'échauffement induit par l'absorption du laser va être transmis très rapidement au substrat, ce qui rend la détection très compliquée.
- la photo-acoustique qui peut être séparée en 4 étapes :

    (1) absorption du rayonnement laser par le gaz excitant ainsi les niveaux d'énergies rotationnels, électroniques et vibrationnels;
    (2) dans le cas d'excitations ro-vibrationnelles, désexcitation du gaz préférentiellement par des collisions moléculaires qui vont se traduire par un transfert d'énergie de rotation/vibration et énergie cinétique créant un chauffage localisé du gaz ;
    (3) génération d'une onde acoustique et d'une onde thermique provoquée par l'expansion due au chauffage du gaz ;
    (4) détection par le microphone du signal acoustique. L'amplitude de vibration du microphone est représentative de la concentration du gaz et la longueur d'onde du rayonnement laser absorbée par le gaz indique sa composition. Cette méthode est très intéressante mais elle ne permet pas d'avoir une image d'une zone. Il faudrait scanner le laser sur l'échantillon ce qui demande de l'instrumentation et du temps de mesure.

Ces techniques ne permettent donc pas d'obtenir une image résolue spatialement et spectralement avec un dispositif simple et compact.

WO 2011/014282 A2 divulgue la détection d'au moins une particule prédéterminée, lesdites particules possédant un indice de réfraction et une raie d'absorption à une longueur d'onde de résonance, ladite raie d'absorption induisant une variation de l'indice de réfraction sur une région spectrale, la détection comprenant les étapes suivantes:

    A. l'émission d'un rayonnement incident cohérent à une pluralité de longueurs d'onde distinctes, successivement une par une, lesdites longueurs d'ondes étant comprises dans ladite région spectrale; avec
    pour chaque longueur d'onde les étapes suivantes:

        • A1 : l'illumination, par le rayonnement incident à la longueur d'onde, d'un élément interférométrique comprenant au moins deux couches superposées, une couche dite mince, disposée au dessus d'une couche dite substrat, ladite particule étant accolée à une surface de ladite couche mince, un indice de réfraction et une épaisseur de la couche mince étant tel que l'élément interférométrique forme une cavité Fabry-Pérot avec ou sans particule accolée;

- A2 : l'acquisition, par un capteur matriciel, d'une image comprenant une première portion issue de la détection du rayonnement incident transmis ou réfléchi par l'élément interférométrique seul et une deuxième portion issue de la détection du rayonnement incident transmis ou réfléchi par l'élément interférométrique et une particule quelconque accolée à une surface de ladite couche mince, des pixels de la première portion présentant une intensité différente de celles des pixels de la deuxième portion;

B. le calcul de la variation d'intensité, en fonction des longueurs d'onde du rayonnement incident, d'au moins un premier pixel de la première portion issue de la détection du rayonnement incident réfléchi, dite première variation et d'au moins un deuxième pixel de la deuxième portion issue de la détection du rayonnement incident réfléchi, dite deuxième variation

C. la détermination d'un déphasage entre la première et la deuxième variation et la détection de la particule lorsqu'il y a un déphasage.

L'invention vise à pallier certains problèmes de l'art antérieur. A cet effet, un objet de l'invention est un dispositif de détection d'une particule prédéterminée possédant l'avantage d'avoir un grand champ d'imagerie, d'être compact et de nécessiter l'utilisation d'un élément interférométrique peu coûteux à produire et facilement reproductible.

Résumé de l'invention :

Un objet de l'invention est une méthode de détection d'au moins une particule prédéterminée selon la revendication 1.

Selon des modes particuliers de l'invention :

- dans l'étape B, une identification du premier et du deuxième pixel est réalisée par traitement d'image en comparant l'intensité des pixels d'une image Ii associée à une longueur d'onde $\lambda_i$ ;
- dans l'étape C, la détermination de l'évolution du déphasage $\phi_i$ comprend la détermination d'une fonction $fn_p$ représentant les longueurs d'onde $\lambda_{max,P}$ des maximums locaux de la deuxième variation en fonction des longueurs d'onde $\lambda_{max,BG}$ des maximums locaux de la première variation ;
- lesdites longueurs d'onde distinctes $\lambda_i$ i$\in$[1,m] sont comprises entre une longueur d'onde inférieure $\lambda_{inf}$ pour laquelle une partie réelle de l'indice de réfraction de la particule est minimum sur ladite région spectrale, et une longueur d'onde supérieure $\lambda_{sup}$, pour laquelle une partie réelle de l'indice de réfraction de la particule est maximum sur la région spectrale ;
- la pluralité de longueurs d'onde distinctes $\lambda_i$ i$\in$[1,m], comprend une première pluralité de longueurs d'onde et une deuxième pluralité de longueurs d'onde, ladite première pluralité de longueur d'onde étant comprise dans un intervalle spectral tel quel [$\lambda_{inf}$; $\frac{\lambda_{res}+\lambda_{inf}}{2}$] et la deuxième pluralité de longueur d'onde étant comprise dans un intervalle spectral tel que [$\frac{\lambda_{res}+\lambda_{sup}}{2}$ ; $\lambda_{sup}$] ;
- dans l'étape A, la pluralité de longueur d'onde distinctes $\lambda_i$ i$\in$[1,m] est choisie, de manière à ce que les longueurs d'onde sont réparties sur l'ensemble d'une portion de ladite région spectrale comprise entre la longueur d'onde inférieure $\lambda_{inf}$ et la longueur d'onde supérieure $\lambda_{sup}$ ;
- ledit élément interférométrique est adapté pour que, pour une épaisseur prédéterminée $e_{30}$ de particules P accolées et traversées par le rayonnement incident, le contraste de la deuxième variation soit nul ou sensiblement nul sur une plage spectrale incluse dans la région de spectrale.

Un autre objet de l'invention est un dispositif de détection d'au moins une particule prédéterminée selon la revendication 8.

Selon des modes particuliers de l'invention : l'indice de de réfraction $n_2$ de la couche mince est tel que

$$1.10\sqrt{n_1} < n_2 < 1.35\sqrt{n_1} \; ;$$

- un matériau de la couche mince est identique au matériau du substrat et dans lequel ladite surface de la couche mince est structurée de manière à ce que l'indice effectif de la couche mince perçu par le rayonnement incident soit tel que $\sqrt{n_1} < n_2 < 1.5\sqrt{n_1}$ ;

- l'épaisseur $e_2$ de la couche mince est adaptée pour que, pour une épaisseur prédéterminée $e_{30}$ de particules accolées et traversées par le rayonnement incident, le contraste de la deuxième variation soit nul ou sensiblement nul sur une plage spectrale incluse dans la région spectrale ;
- la couche mince est en ZnS, ZnSe, CdSe, SiN, AlN, Ta2O5, TiO2, ZrO2 et le substrat est en Si ou Ge ;

Un autre objet de l'invention est un procédé de fabrication d'un élément interférométrique pour dispositif de détection selon la revendication 13.

Selon un mode de réalisation particulier de l'invention, ladite longueur d'onde de résonance $\lambda_{res}$ est comprise entre $3\mu m$ et $12\mu m$, et dans laquelle la ou les particules à détecter sont des particules d'explosifs, des biomolécules.

Brève description des figures :

D'autres caractéristiques, détails et avantages de l'invention ressortiront à la lecture de la description faite en référence aux dessins annexés donnés à titre d'exemple et qui représentent, respectivement :

[Fig.1] une vue schématique d'un dispositif de détection selon l'invention ;

[Fig.2], la partie imaginaire et réelle de l'indice de réfraction d'un exemple de particule prédéterminée ;

[Fig.3], la transmission d'un élément interférométrique du dispositif de détection selon l'invention, en fonction de la longueur d'onde du rayonnement incident, pour une pluralité d'épaisseur de particules à détecter accolées à une surface de l'élément interférométrique ;

[Fig.4A] et [Fig.4B], respectivement, la transmission d'un élément interférométrique du dispositif de détection selon l'invention, en fonction de la longueur d'onde du rayonnement incident, dans différente condition, et un graphique présentant l'évolution, en fonction de la longueur d'onde du rayonnement incident, du déphasage entre deux franges d'interférences obtenues par la traversée par le rayonnement incident d'une portion différente de l'élément interférométrique ;

[Fig.5] une représentation des intervalles spectraux permettant la détermination d'un déphasage selon un mode de réalisation de l'invention ;

[Fig.6] une vue schématique d'un dispositif de détection selon l'invention ;

[Fig.7] une représentation schématique d'une méthode de détection de particules selon l'invention.

Dans les figures, sauf contre-indication, les éléments ne sont pas à l'échelle.

Description détaillée :

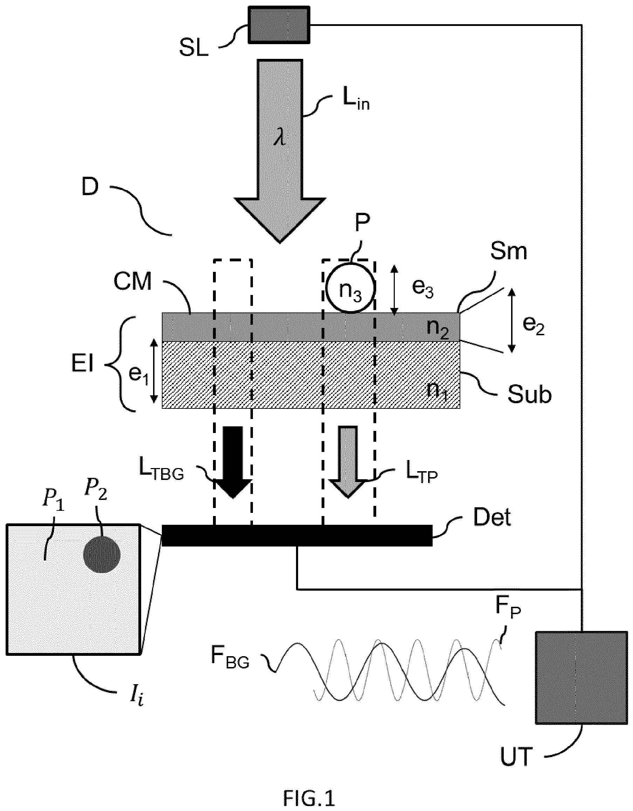

La figure 1 illustre une vue schématique d'un dispositif D de détection d'au moins une particule prédéterminée P.

La particule P est la particule que le dispositif D vise à détecter. Cette particule est connue et prédéterminée lors d'une phase de conception du dispositif (voir plus loin). Cette particule P possède un indice de réfraction $n_3$ et une raie (ou pic) d'absorption à une longueur d'onde de résonance $\lambda_{res}$.

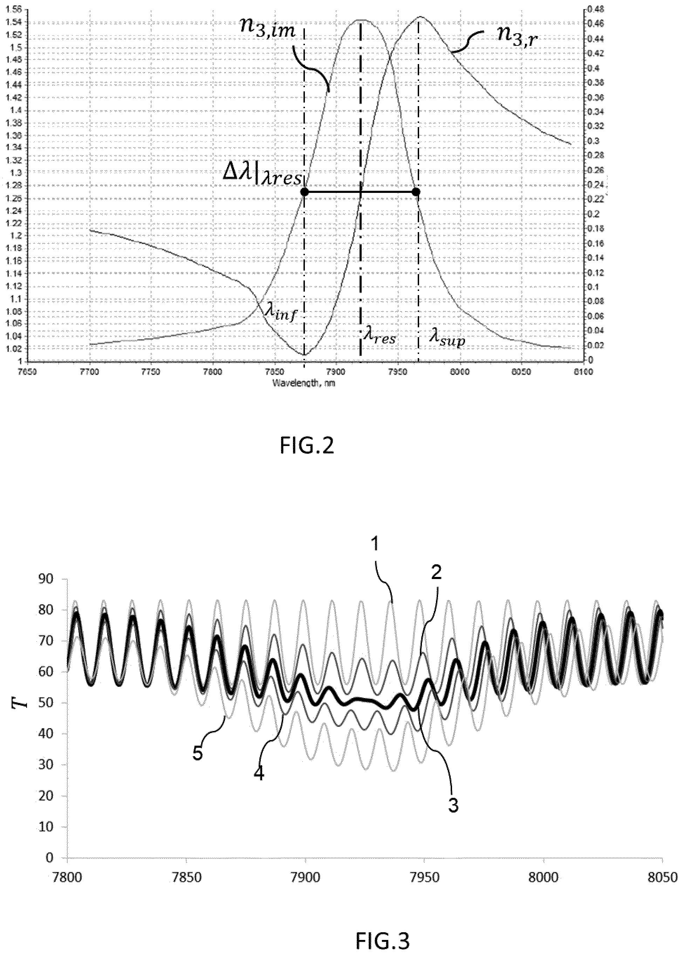

Les relations de Kramers-Kronig relient de manière connue la partie imaginaire $n_{3,im}$ et la partie réelle de l'indice de réfraction $n_{3,r}$. Cette relation induit, à l'absorption résonante à la longueur d'onde de résonance $\lambda_{res}$, une variation brutale de la partie réelle de l'indice de réfraction $n_{3,r}$. Selon l'invention, la variation de l'indice de réfraction de la particule permet de mesurer les changements de phase induits à la longueur d'absorption à l'aide d'une cavité optique. La figure 2 est un graphique représentant la partie imaginaire et réelle de l'indice de réfraction d'un exemple donné à titre non limitatif de particule prédéterminée, le PDMS, possédant une longueur d'onde de résonance $\lambda_{res} = 7.9\mu m$.

Le dispositif D de la figure 1 comprend une source de lumière SL cohérente, accordable en longueur d'onde. Cette source est adaptée pour émettre un rayonnement incident $L_{in}$, cohérent, à une pluralité de longueurs d'onde distinctes $\lambda_i$ $i \in [1,m]$, comprises dans une région spectrale de variation de l'indice de réfraction $\Delta\lambda|_{\lambda res}$ associée à ladite raie d'absorption. La source de lumière est configurée pour émettre successivement les longueurs d'onde, c'est-à-dire une par une au cours du temps. Cette région spectrale $\Delta\lambda|_{\lambda res}$ est par exemple centrée sur la longueur d'onde de résonance $\lambda_{res}$ et de largeur égale à la largeur à mi-hauteur $FWHM_{\lambda res}$du pic d'absorption à la longueur d'onde $\lambda_{res}$, comme dans l'exemple de la figure 2. Alternativement, cette région spectrale $\Delta\lambda|_{\lambda res}$est centrée sur la longueur d'onde de résonance $\lambda_{res}$ et de largeur égale à $1.5 \times FWHM_{\lambda res}$ du pic d'absorption à la longueur d'onde $\lambda_{res}$.

Selon un mode de réalisation préféré de l'invention, la source de lumière SL comprend un système optique de collimation, adapté pour que le rayonnement incident émis par la source de lumière soit collimaté. Ce système optique de collimation peut, par exemple, être une lentille dont le plan focal objet comprend les points sources du rayonnement incident.

Un élément interférométrique EI du dispositif D est agencé de manière à être illuminé par le rayonnement incident $L_{in}$. Cet élément interférométrique comprend au moins deux couches superposées, une couche dite mince CM disposée au-dessus d'une couche dite substrat Sub, toutes les deux transparentes dans la région spectrale de variation de l'indice de réfraction $\Delta\lambda|_{\lambda res}$ associée à ladite raie d'absorption. Par transparente, on entend ici que chaque couche possède une transmission supérieure à 50%, préférentiellement 90% dans la région spectrale.

L'élément interférométrique EI est configuré de manière à être une cavité optique de type Fabry-Pérot formant des franges de longueurs d'onde en transmission. Le principe de l'invention est de détecter un déphasage entre ces franges issues du Fabry-Pérot sans particules accolées et des franges issues du Fabry-Pérot avec particules accolées. En effet, la présence de particules accolées à la surface Sm de la couche mince modifie localement le coefficient de réflexion de la surface où elles sont accolées, ce qui conduit à un déphasage du coefficient de réflexion (voir plus loin).

Les inventeurs ont mis en évidence qu'un Fabry-Pérot formé d'une seule couche ne permet pas d'observer un déphasage. Ainsi, l'élément EI est configuré de manière à ce que le déphasage de la courbe de la transmission en fonction de la longueur d'onde d'un empilement formé par au moins une particule accolée à l'élément interférométrique d'une part, et de l'élément interférométrique seul d'autre part, ne soit pas constant dans la région spectrale.

Après de nombreuses simulations, les inventeurs ont déterminés que la couche mince doit présenter un indice de réfraction $n_2$ sensiblement décalé de la valeur qui ferait de la couche mince CM une couche antireflet vis-à-vis de l'air à la longueur d'onde d'illumination $\lambda_{res}$, c'est-à-dire $n_{2r} = \sqrt{n_1}$ (conjointement avec une épaisseur $e_{2r} = \lambda_{res}/4n_1$). Cela permet d'obtenir des franges de longueurs d'onde en transmission issue de la cavité Fabry-Pérot lorsqu'aucune particule P n'est accolée. En effet, si la couche mince était une couche anti-reflet, il n'existerait pas d'interféromètre Fabry-Pérot. Les inventeurs ont par ailleurs déterminé qu'il ne fallait pas trop s'écarter de ces conditions anti-reflet car, dans une plage d'indice $n_2$ (et avec $n_2 > n_{2r}$), on observe une inversion du contraste des franges issues du Fabry-Pérot sans particules accolées et des franges issues du Fabry-Pérot avec particules accolées, lorsque la longueur d'onde du rayonnement incident balaye la résonance (voir figure 3 et passage rattaché). Cette inversion de franges est une signature de la présence de la particule accolée à la couche mince et permet de une indentification de cette dernière. Si on s'écarte trop de cette condition sur l'indice $n_2$ ($n_2$ trop proche de $n_{2r}$, $n_2 < n_{2r}$ ou $n_2$ trop important, par exemple $n_2 > 2.5. n_{2r}$), la zone d'inversion de contraste s'éloigne de la longueur d'onde de résonance, voire disparaît (il n'y a alors plus d'inversion de contraste).

Cette caractéristique se traduit par deux conditions sur les caractéristiques $e_2$ et $n_2$ de la couche mince CM. Plus précisément, un indice de réfraction $n_2$ et une épaisseur $e_2$ de la couche mince étant déterminé à partir d'un indice $n_1$ du substrat et de la longueur d'onde de résonance $\lambda_{res}$ tel que l'élément interférométrique (EI) forme une cavité Fabry-Pérot avec ou sans particule P accolée; et génère une inversion du contraste des franges issues du Fabry-Pérot sans particules accolées et des franges issues du Fabry-Pérot avec particules accolées, dans la région spectrale de variation de l'indice de réfraction $\Delta\lambda|_{\lambda res}$.

Selon l'invention, $e_2$ et $n_2$ verifient la condition :

- 

$$0.8 \times \lambda_{res}/4n_1 < e_2 < 1.2 \times \lambda_{res}/4n_1$$

- $\sqrt{n_1} < n_2 < 1.5\sqrt{n_1}$ , de préférence tel que $1.10\sqrt{n_1} \times< n_2 < 1.35\sqrt{n_1}$ .

Dans la suite, on suppose qu'au moins une particule P est accolée à une surface Sm de ladite couche mince CM.

Le dispositif D selon l'invention, utilise le principe de l'absorption IR des particules P qui vont modifier localement le coefficient de réflexion de la surface Sm où elles sont accolées. En effet, le coefficient de réflexion de la surface Sm à la longueur d'onde de résonance de l'échantillon $\lambda_{res}$ va être modifié lors de la présence des particules modifiant ainsi le flux du rayonnement incident réfléchi ou transmis. On définit le coefficient de réflexion $R_p$ pour l'interface entre la surface Sm de la couche mince et une particule P accolée à cette surface par : $R_p = \left(\frac{n_3 - n_2}{n_3 + n_2}\right)^2$ . De même, on définit le coefficient de réflexion $R_{bg}$ pour l'interface entre la surface Sm de la couche mince et l'air d'indice $n_{air}$ lorsqu'aucune particule n'est accolée à cette zone de la surface Sm par $R_{bg} = \left(\frac{n_{air}-n_2}{n_{air}+n_2}\right)^2$. Ainsi, lors d'une variation de la longueur d'onde du rayonnement incident autour de la région spectrale, la partie réelle $n_{3,r}$ de l'indice de réfraction $n_3$ (et donc le coefficient de réflexion $R_p$) varie de manière significative.

D'une manière connue, la transmission du rayonnement incident par l'élément interférométrique est modélisée par le formalisme des matrices d'Abelès. Ce formalisme de couches minces est adapté car les particules P à détecter sont généralement entourées d'un film liquide (eau, sueur, sébum). Pour une surface Sm hydrophile, ces particules auront tendances à s'étaler pour former un film d'épaisseur fine $e_3$. L'utilisation de ce formalisme suppose qu'une dimension selon une direction longitudinale de particules P accolées est supérieure d'au moins un facteur 10 à l'épaisseur $e_3$ de particules P accolées.

La figure 3 représente la transmission de l'élément interférométrique du dispositif de détection de la figure 1 seul, en fonction de la longueur d'onde du rayonnement incident (courbe 1). La figure 3 représente de plus, la transmission, en fonction de la longueur d'onde du rayonnement incident, de l'empilement formé par respectivement une épaisseur de 250nm (courbe 2), de 500 nm (courbe 3), de 750 nm (courbe 4) de 1000nm (courbe 5) de particules de PDMS accolées et l'élément interférométrique EI. Les oscillations de la transmission en fonction de la longueur d'onde sont dues au passage d'interférences constructives à destructives (ou l'inverse) produites par les rayons du rayonnement incident réfléchis ou transmis par les différentes interfaces de l'élément interférométrique lors d'un changement de la longueur d'onde.

La figure 3 permet d'observer directement l'effet de l'absorption de différentes épaisseurs de particules P accolées, réduisant fortement la transmission des courbes 2 à 5 par rapport à la courbe 1. Cette absorption est due à la partie imaginaire $n_{3,im}$ de l'indice de réfraction de la particule P relié au coefficient d'absorption $\alpha$ des particules à la longueur d'onde $\lambda$, par l'équation suivante $\alpha = 4\pi n_{3,im}/\lambda$.

Pour une même courbe parmi les courbes 2 à 5, la variation de la valeur moyenne de la transmission est due à la variation de la partie imaginaire $n_{3,im}$ de l'indice de réfraction de la particule P sur la région spectrale $\Delta\lambda|_{\lambda res}$. De manière critique, la figure 3 permet d'observer une évolution, en fonction de la longueur d'onde, du déphasage $\phi$ entre les courbes 2 à 5 et la courbe 1. Cette évolution du déphasage est due à la variation de la partie réelle de l'indice de réfraction $n_3$ sur la région spectrale $\Delta\lambda|_{\lambda res}$ et c'est elle qui va permettre d'identifier la présence de particules P accolées à la surface Sm.

Dans tous les modes de réalisation de l'invention, l'épaisseur $e_2$ de la couche mince est configurée pour qu'il existe une épaisseur prédéterminée $e_{30}$ de particules accolées et traversées par le rayonnement incident, telle que le contraste des oscillations de la transmission en fonction de la longueur d'onde d'un tel empilement soit nul ou sensiblement nul sur une plage spectrale incluse dans la région spectrale $\Delta\lambda|_{\lambda res}$. Par sensiblement nul, on entend un contraste inférieur à 10%. Cette condition permet l'identification, par le dispositif D, d'une épaisseur particulière et prédéterminée $e_{30}$ de particules P accolées permettant par exemple de remonter à une concentration dans un milieu ambiant donné. Dans la figure 3, cette épaisseur $e_{30}$ correspond à l'epaisseur pour laquelle la courbe 3 est obtenue. Pour une épaisseur de particule accolée supérieur à $e_{30}$, on observe un inversion du contraste des franges issues du Fabry-Pérot sans particules accolées (courbe 1) et des franges issues du Fabry-Pérot avec particules accolées (courbe 4 et 5), dans la région spectrale de variation de l'indice de réfraction $\Delta\lambda|_{\lambda res}$.

Dans l'exemple de la figure 3, donné à titre non limitatif, le substrat est en silicium, d'une épaisseur $e_1 = 750\mu m$ et possède un indice de réfraction $n_1 = 3.42$ à $\lambda_{res} = 7.9\mu m$. De plus, la couche mince est en ZnS, d'une épaisseur $e_2 = 889nm$ et possède un indice de réfraction $n_2 = 2.2$ à $\lambda_{res} = 7.9\mu m$. Au vu de cet exemple et du reste de la description, l'homme de l'art adaptera aisément les différents paramètres de l'élément interférométrique afin de détecter une autre particule prédéterminée P.

Le dispositif D de la figure 1 comprend de plus un capteur matriciel ou détecteur Det. Ce détecteur est adapté pour détecter une image comprenant une première portion $P_1$ issue de la détection du rayonnement incident transmis $L_{TBG}$ par l'élément interférométrique seul et une deuxième portion $P_2$ issue de la détection du rayonnement incident transmis $L_{TP}$ par l'élement interférométrique et une particule quelconque (cette particule pouvant être une particule à détecter P ou un autre objet quelconque O) accolée à la surface Sm de ladite couche mince. L'identification de la première portion et de la deuxième portion est basée sur le fait que les pixels de la première portion présentent une intensité différente de celles des pixels de la deuxième portion. Pour chaque longueur d'onde $\lambda_i$ du rayonnement incident, le détecteur détecte une image $I_i$ associée. Pour cela, le dispositif de la figure 1 comprend un processeur UT relié au détecteur et à la source de lumière SL afin de synchroniser ces deux éléments.

L'intensité des pixels de chaque image $I_i$ (ou valeur ADU pour *analog to digital unit* en anglais) est proportionnelle au nombre de photons détectés par ce pixel. Pour un faisceau collimaté ou situé dans le plan image de l'échantillon, l'intensitédes pixels de l'image est donc représentative de la transmission du trajet optique du rayonnement incident entre la source de lumière SL et le détecteur Det. Aussi, pour chaque i∈[1,m], la première portion P$_1$ de l'image I$_i$ représente la transmission à la longueur d'onde $\lambda_i$ de l'élément interférométrique seul, et la deuxième portion de l'image I$_i$ représente la transmission à la longueur d'onde $\lambda_i$ de l'empilement formé par au moins une particule quelconque et l'élément interférométrique. La courbe 1 de la figure 3 correspond à la première variation d'intensité et les courbes 2 à 5 de la figure 3 correspondent à la deuxième variation d'intensité, lorsque la particule quelconque accolée est une particule prédéterminée P.

Selon un mode de réalisation de l'invention, le détecteur est placé le plus proche possible de l'élément interférométrique et au moins dans la zone de diffraction de Fresnel (ou de champ proche) après l'élément interférométrique afin que l'image soit représentative de la transmission et non pas de la diffraction en champ lointain de la transmission (donc sa transformée de Fourier).

Le processeur UT est configuré pour calculer, en fonction des longueurs d'onde du rayonnement incident $\lambda_i$ i∈[1,m], la variation d'intensité d'au moins un premier pixel de la première portion, dite première variation F$_{BG}$ et d'au moins un deuxième pixel de la deuxième portion, dite deuxième variation F$_P$. La première variation correspond à la transmission, en fonction des longueurs d'onde du rayonnement incident $\lambda_i$ i∈[1,m], de l'élément interférométrique seul. La deuxième variation correspond à la transmission, en fonction des longueurs d'onde du rayonnement incident $\lambda_i$ i∈[1,m], de l'empilement formé par au moins une particule accolée et l'élément interférométrique.

Le processeur UT est configuré pour déterminer une évolution, en fonction des longueurs d'onde du rayonnement incident $\lambda_i$ i∈[1,m], d'un déphasage $\phi_i$ entre la première variation et la deuxième variation. Enfin, le processeur est configuré pour détecter la particule accolée lorsque le déphasage $\phi_i$ n'est pas constant en fonction des longueurs d'onde du rayonnement incident $\lambda_i$ i∈[1,m].

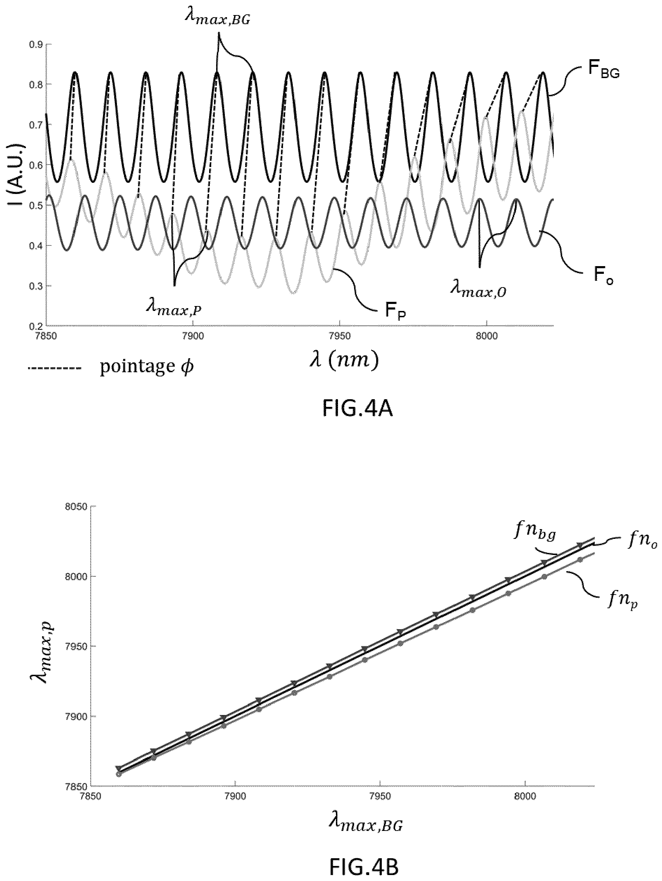

La figure 4A illustre la première variation F$_{BG}$ et la deuxième variation F$_P$ obtenue pour l'exemple de la figure 3, pour une épaisseur de particules de PDMS de 1000nm. L'abscisse de ces variations est la longueur d'onde du rayonnement incident et l'ordonnée est l'intensité du premier et du deuxième pixel, respectivement. Les lignes pointillées de la figure 4A pointent les maximums locaux $\lambda_{max,BG}$ et $\lambda_{max,P}$ de la première et de la deuxième variation, respectivement, et permettent de visualiser graphiquement l'évolution du déphasage $\phi_i$ entre la première variation F$_{BG}$ et la deuxième variation F$_P$, en fonction de la longueur d'onde $\lambda_i$ du rayonnement incident.

Selon un mode de réalisation de l'invention, l'identification par le processeur du premier et du deuxième pixel est réalisée par traitement d'image en comparant l'intensité des pixels de l'une des images I$_i$ i∈[1,m], associée à une longueur d'onde $\lambda_i$. En effet, comme mentionné précédemment, la transmission de l'élément interférométrique seul est inférieure à la transmission de l'empilement formé par au moins une particule P accolée et l'élément interférométrique, sur la région spectrale de variation de l'indice de réfraction $\Delta\lambda|_{\lambda res}$ (voir Fig.3). Aussi, la valeur ADU des pixels associés à la deuxième portion L$_{TP}$ est plus faible que celle des pixels associés à la première portion L$_{TBG}$. Il est important de noter que lorsqu'aucune particule P, ni aucun autre objet, n'est accolé à la surface Sm de l'élément interférométrique, il n'existe pas de différence de transmission significative entre les différents rayons du rayonnement incident. Aussi, la valeur ADU des pixels du capteur est sensiblement la même et, en comparant la valeur des pixels par traitement d'image, il est possible de déterminer qu'aucune particule n'est accolée à l'élément interférométrique.

Selon un mode de réalisation préféré de l'invention, la pluralité de longueurs d'onde distinctes $\lambda_i$, i ∈ [1, $n$] du rayonnement incident sont émises successivement de manière à ce que les longueurs d'onde soient comprises entre une longueur d'onde inférieure $\lambda_{inf}$ et une longueur d'onde supérieure $\lambda_{sup}$, où $\lambda_{inf}$ (respectivement $\lambda_{sup}$) est la longueur d'onde pour laquelle la partie réelle de l'indice de réfraction de la particule est minimum (respectivement maximum) sur la région de variation. Cette condition permet d'observer le plus grand déphasage possible du coefficient de réflexion R$_P$ et donc le plus grand déphasage $\phi_i$ entre la première variation et la deuxième variation.

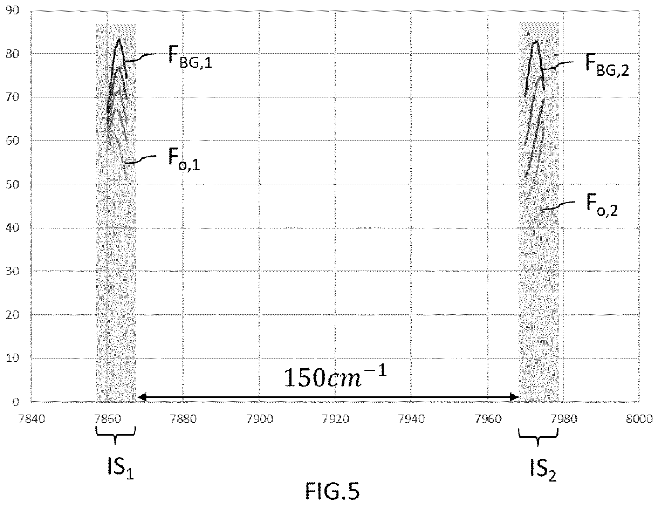

Selon une première variante de ce mode de réalisation préféré de l'invention, illustrée en figure 5, la pluralité de longueurs d'onde distinctes $\lambda_i$,i ∈ [1, $n$], comprend une première pluralité de longueurs d'onde et une deuxième pluralité de longueurs d'onde. La première pluralité de longueur d'onde est comprise dans un intervalle spectral IS$_1$ tel quel $[\lambda_{inf}; \frac{\lambda_{res}+\lambda_{inf}}{2}]$ et la deuxième pluralité de longueurs d'onde est comprise dans un intervalle spectral IS$_2$ tel que $[\frac{\lambda_{res}+\lambda_{sup}}{2}; \lambda_{sup}]$. Dans cette première variante, le processeur est donc configuré pour calculer une première partie de la première et de la deuxième variation respectivement F$_{BG,1}$ et F$_{o,1}$, associées à la première pluralité de longueurs d'onde. De plus, le processeur est configuré pour calculer une deuxième partie de la première et de la deuxième variation, respectivement F$_{BG,2}$ et F$_{o,2}$, associées à la deuxième pluralité de longueurs d'onde. Dans ce mode de réalisation, la première pluralité de longueurs d'onde doit permettre la détermination d'au moins une période des oscillations de la première partie de la première variation et de la deuxième variation afin de permettre la détermination d'un déphasage entre la première et la deuxième variation. De plus, la deuxième pluralité de longueurs d'onde doit permettre la détermination d'au moins une période des oscillations de la deuxième partie de la première variation et de la deuxième

EP 3 835 756 B1

variation. Ces conditions sont nécessaires afin de pouvoir déterminer une évolution du déphasage en fonction de la longueur d'onde. La longueur d'onde inférieure et la longueur d'onde supérieure sont situées de part et d'autre de la longueur d'onde de résonance et correspondent à une variation maximale de la partie réelle de l'indice de réfraction $n_3$. Cela permet d'obtenir une importante variation du déphasage entre la première partie de la première et de la deuxième variation d'une part, et la deuxième partie de la première et de la deuxième variation d'autre part. La détection de la particule P est alors facilitée. De plus, ce mode de réalisation permet de varier la longueur d'onde du rayonnement incident uniquement autour de deux zones spectrales distinctes, moins étendues que la région spectrale $\Delta\lambda|_{\lambda res}$. Aussi, il permet la détermination d'une évolution du déphasage plus rapide qu'un balayage de la totalité de la région spectrale. Dans ce mode de réalisation les longueurs d'onde de la première pluralité et de la deuxième pluralité couvre au moins 3 cm⁻¹ à 5 cm⁻¹ et sont séparées d'environ 100 cm⁻¹ à 150 cm⁻¹ afin de pouvoir calculer la première et la deuxième variation. La première plage de longueur d'onde correspond à la plage d'accordabilité d'un laser QCL discret et la seconde correspond à la plage du gain du puit quantique de l'empilement de couche du laser QCL.

Selon une deuxième variante de ce mode de réalisation préféré de l'invention, la pluralité de longueur d'onde est choisie de manière à ce que les longueurs d'onde échantillonnent l'ensemble d'une région spectrale comprise entre la longueur d'onde inférieure $\lambda_{inf}$ et la longueur d'onde supérieure $\lambda_{sup}$. Ainsi, pour des longueurs d'onde suffisament proche l'une de l'autre (par exemple séparées d'environ 100 à 150 cm⁻¹), il est possible de calculer précisément la première et la deuxième variation puis de déterminer l'évolution du déphasage le plus simplement possible, c'est-à-dire en balayant la totalité de la région spectrale à l'aide du rayonnement incident.

Selon un mode de réalisation, la détermination, par le processeur UT, d'une évolution du déphasage $\phi_i$ en fonction des longueurs d'onde du rayonnement incident comprend la détermination d'une fonction $fn_p$ représentant les longueurs d'onde $\lambda_{max,P}$ des maximums locaux de la deuxième variation en fonction des longueurs d'onde $\lambda_{max,BG}$ des maximums locaux de la première variation, sur la région spéctrale $\Delta\lambda|_{\lambda res}$. La détermination de la fonction $fn_p$ est réalisée par interpolation à partir d'au moins deux longueurs d'ondes $\lambda_{max,p}$ des maximums locaux de la deuxième variation chacune associée à une longueur d'onde $\lambda_{max,BG}$ de la première variation. La figure 4B illustre la représentation de la fonction $fn_p$. Lorsque la pente de la fonction $fn_p$ est différente de la valeur 1, le processeur est configuré pour confirmer la présence d'une particule P accolée. En effet, cela signifie que le déphasage entre la première variation et la deuxième variation n'est pas constant sur la plage spectrale. Plus précisement, cela implique qu'une particule P présentant une variation de la partie réelle de son indice de réfraction sur la plage spectrale est accolée à l'élément interférométrique. Dans la figure 4B, la fonction $fn_{bg}$ représente l'équation y=x déterminée à partir des longueurs d'onde $\lambda_{max,BG}$ des maximums locaux de la première variation. Cette fonction est simplement représentée pour comparaison avec la pente de la fonction $fn_p$.

Le dispositif D possède l'avantage d'être un dispositif d'imagerie « sans lentille » qui est donc facile à aligner et à utiliser et qui permet une détection rapide de particules prédéterminées P.

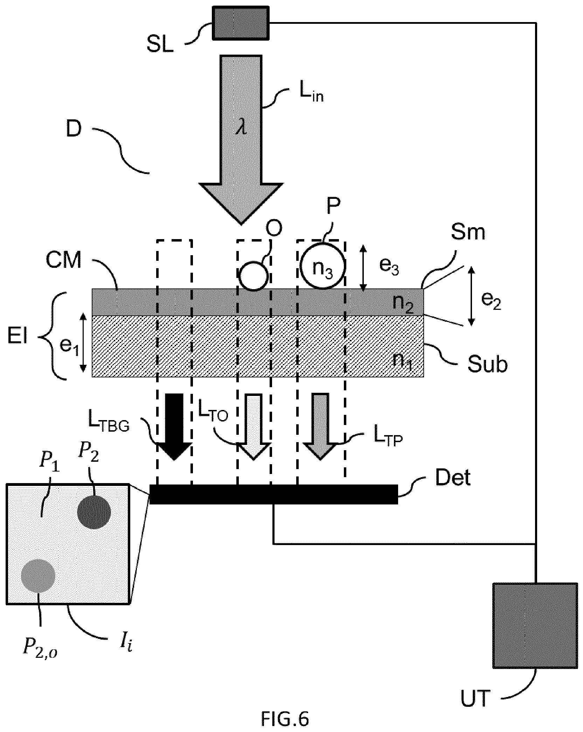

Un autre avantage du dispositif D de la figure 1 est qu'il permet de s'affranchir de l'absorption non résonante d'un objet O, c'est-à-dire un objet qui absorbe sur la région spectrale mais qui ne possède pas une raie d'absorption à ou au voisinage de $\lambda_{res}$, comme par exemple l'eau (voir figure 6). Cela signifie que la présence d'un tel objet O accolé à une surface Sm de la couche mince CM ne conduira pas à la détection erronée d'une particule P à détecter par le processeur UT. Pour illustrer cet avantage, la figure 4A présente en outre une deuxième variation $F_o$ de l'intensité d'un deuxième pixel d'une deuxième portion $P_{2,o}$ de l'image $I_i$ issue de la détection du rayonnement incident de longueur d'onde $\lambda_i$ transmis $L_{TO}$ par l'empilement formé par l'objet O accolé à la surface Sm de l'élément interférométrique, et l'élément interférométrique (voir figure 6). Cette deuxième variation $F_o$ est déterminée par le processeur de la même manière que précisé précédemment. Le processeur détermine alors la fonction $fn_o$ représentant les longueurs d'onde $\lambda_{max,0}$ des maximums locaux de la deuxième variation en fonction des longueurs d'onde $\lambda_{max,BG}$ des maximums locaux de la première variation, sur la région spéctrale $\Delta\lambda|_{\lambda res}$ (voir figure 4B). Bien que l'objet O absorbe aux longueurs d'onde $\lambda_i$, cette absorption n'est pas résonante ce qui implique qu'un déphasage entre la première variation et la deuxième variation $F_o$ est constant en fonction de la longueur d'onde du rayonnement incident. Ainsi, la pente de la fonction $fn_0$ est égale à 1 et le processeur n'associe pas l'objet O à une particule P à détecter.

Selon un mode de réalisation, la source de lumière est une source laser accordable émettant sur une gamme spectrale comprise entre $3\mu m$ et $12\mu m$ et la longueur d'onde de résonance $\lambda_{res}$ de la particule prédéterminée à détecter P est comprise dans cette gamme spectrale. Selon un mode préférée de l'invention, cette source est un laser à cascade quantique (QCL). Les QCLs possèdent l'avantage d'être compact et de présenter une très bonne accordabilité en longueur d'onde. Alternativement, la source est un oscillateur paramétrique optique (OPO).

Selon un mode de réalisation de l'invention, la couche mince est en ZnS, en ZnSe, CdSe, SiN, AlN, Ta2O5, TiO2, ZrO2, carbone amorphe, chalcogénure et le substrat est en Si ou en Ge

Alternativement, selon un autre mode de réalisation de l'invention, le matériau de la couche mince est indentique au matériau du substrat et la surface de la couche mince est structurée de manière à ce que l'indice effectif de la couche mince perçu par le rayonnement incident soit adapté comme précisé précédemment. Par « structurée », on entend ici

8

que la couche présente un motif répété selon une direction longitudinale de la couche mince, avec une demipériode inférieure à la pluralité de longueurs d'onde distinctes $\lambda_i$ i∈[1,m] du rayonnement incident. La structuration de la couche mince peut être réalisée avec l'ensemble des techniques connues de l'homme de l'art comme la lithographie par faisceau d'éléctrons ou la lithographie EUV.

Selon un mode de réalisation, le diamètre du rayonnement incident lors de l'illumination de l'élément interférométrique est supérieur ou égale à la dimension du détecteur Det c'est-à-dire supérieur ou égale à 1cm et une dimension longitudinale de l'élément interférométrique est supérieure ou égale à la dimension du détecteur Det. Ainsi, il est possible de réaliser de la détection de particules P en grand champ.

Selon un mode de réalisation, le capteur matriciel de l'invention est une matrice de bolomètre, un photodétecteur infrarouge de type Tellurure de mercure-cadmium (MCT), un imageur hybridé (regroupant les technologies MCT et QWIP) ou encore un matrice de pyromètre.

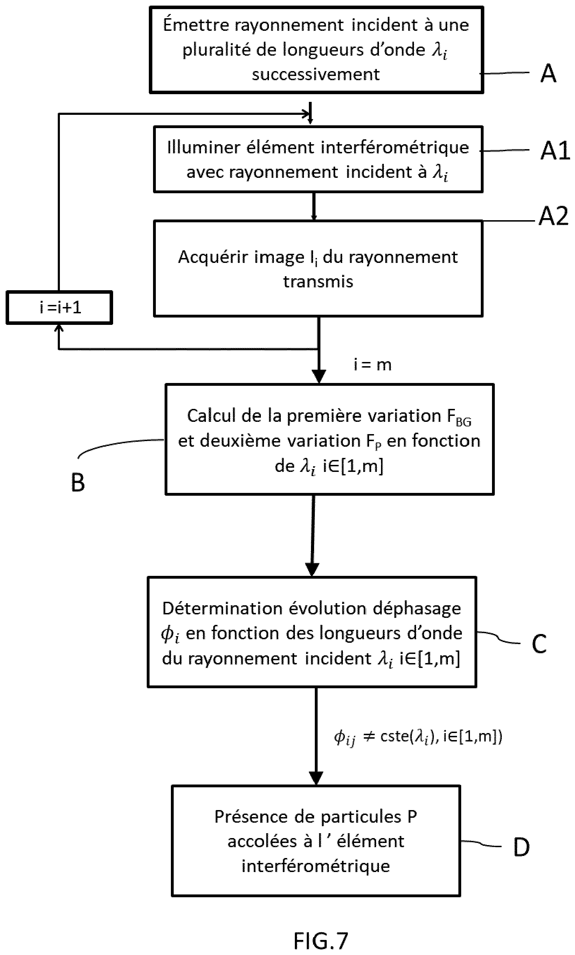

Un autre objet de l'invention est une méthode de détection d'au moins une particule prédéterminée mise en oeuvre par le dispositif de détection D de la figure 1. Cette méthode est schématisée en figure 7 et comprend les étapes suivantes :

- l'émission du rayonnement incident L$_{in}$ cohérent à une pluralité de longueurs d'onde distinctes $\lambda_i$ i∈[1,m], successivement une par une, lesdites longueurs d'ondes étant comprises dans une région de variation de l'indice de réfraction $\Delta\lambda|_{\lambda res}$associée à ladite raie d'absorption;
  pour chaque i∈[1,m] réaliser les étapes suivantes:

  - l'illumination, par le rayonnement incident L$_{in}$ émis par la source de lumière SL, de l'élément interférométrique EI;

  - l'acquisition, par le capteur matriciel Det, d'une image I$_i$ comprenant la première portion P$_1$ issue de la détection du rayonnement incident transmis par l'élément interférométrique seul, L$_{TBG}$, et la deuxième portion P2 issue de la détection du rayonnement incident transmis L$_{TP}$, L$_{TO}$ par l'élement interférométrique et une particule quelconque O, P accolée à la surface (Sm) de la couche mince;

- le calcul, par le processeur UT, de la variation d'intensité, en fonction des longueurs d'onde du rayonnement incident $\lambda_i$ i∈[1,m], d'au moins un premier pixel de la première portion, dite première variation F$_{BG}$ et d'au moins un deuxième pixel de la deuxième portion, dite deuxième variation F$_P$ ;

- la détermination, par le processeur UT, de l'évolution du déphasage $\phi_i$ entre la première variation et la deuxième variation, en fonction des longueurs d'onde du rayonnement incident $\lambda_i$ i∈[1,m];

- la détection de la particule P accolée lorsque le déphasage $\phi_i$ n'est pas constant en fonction des longueurs d'onde du rayonnement incident $\lambda_i$ i∈[1,m].

Un autre objet de l'invention est un procédé de fabrication de l'élément interférométrique EI pour le dispositif de détection D de la figure 1. Ce procédé de fabrication comprend une phase de conception de l'élément interférométrique et une étape de fabrication matérielle de cet élément interférométrique ainsi conçu. La phase de conception du procédé de fabrication comprend les étapes suivantes :

- la sélection de la particule P à détecter présentant une raie d'absorption à une longueur d'onde de résonance $\lambda_{res}$ ;

- la sélection d'un substrat d'indice de réfraction n$_1$ ;

- la détermination de l'épaisseur e$_2$ et d'un indice de réfraction n$_2$ de la couche mince verifiant les conditions suivantes :

$$0.8 \times \frac{\lambda_{res}}{4n_1} < e_2 < 1.2 \times \frac{\lambda_{res}}{4n_1} \qquad \text{et} \qquad \sqrt{n_1} < n_2 < 1.5\sqrt{n_1}.$$

Selon un mode de réalisation du procédé de fabrication de l'invention, la longueur d'onde de résonance $\lambda_{res}$ est comprise entre $3\mu m$ et $12\mu m$, et la ou les particules P à détecter sont des particules d'explosifs, des biomolécules ou tout objet présentant une signature infrarouge.

**Revendications**

1. Méthode de détection d'au moins une particule prédéterminée (P), lesdites particules possédant un indice de réfraction $n_3$ et une raie d'absorption à une longueur d'onde de résonance $\lambda_{res}$ , ladite raie d'absorption induisant une variation de l'indice de réfraction sur une région spectrale , ladite méthode comprenant les étapes suivantes :

   A. l'émission d'un rayonnement incident ($L_{in}$) cohérent à une pluralité de longueurs d'onde distinctes $\lambda_i$ i∈[1,m], successivement une par une, lesdites longueurs d'ondes étant comprises dans ladite région spectrale;
   pour chaque i∈[1,m] on réalise les étapes suivantes:

   - A1 : l'illumination, par le rayonnement incident ($L_{in}$) à la longueur d'onde $\lambda_i$ d'un élément interférométrique (EI) comprenant au
   moins deux couches superposées, une couche dite mince (CM), disposée au dessus d'une couche dite substrat (Sub), toutes les deux transparentes à la longueur d'onde $\lambda_i$, ladite particule étant accolée à une surface (Sm) de ladite couche mince, un indice de réfraction $n_2$ et une épaisseur $e_2$ de la couche mince étant tel que l'élément interférométrique (EI) forme une cavité Fabry-Pérot avec ou sans particule (P) accolée et génère une inversion du contraste entre des franges issues du Fabry-Pérot sans particules accolées et des franges issues du Fabry-Pérot avec particules accolées, avec :

   $$0.8 \times \frac{\lambda_{res}}{4n_1} < e_2 < 1.2 \times \frac{\lambda_{res}}{4n_1}$$

   et $\sqrt{n_1} < n_2 < 1.5\sqrt{n_1}$ avec $n_1$ un indice de réfraction du substrat ;
   - A2 : l'acquisition, par un capteur matriciel, d'une image $I_i$ comprennant une première portion ($P_1$) issue de la détection du rayonnement incident transmis ($L_{TBG}$) par l'élément interférométrique seul et une deuxième portion ($P_2$) issue de la détection du rayonnement incident transmis ($L_{TP}$, $L_{TO}$) par l'élement interférométrique et une particule quelconque (O, P) accolée à une surface (Sm) de ladite couche mince, des pixels de la première portion présentant une intensité différente de celles des pixels de la deuxième portion;

   B. le calcul de la variation d'intensité, en fonction des longueurs d'onde du rayonnement incident $\lambda_i$ i∈[1,m], d'au moins un premier pixel de la première portion, dite première variation ($F_{BG}$) et d'au moins un deuxième pixel de la deuxième portion, dite deuxième variation (Fp) ;
   C. la détermination d'une évolution, en fonction des longueurs d'onde du rayonnement incident $\lambda_i$ i∈[1,m], d'un déphasage $\phi_i$ entre la première variation et la deuxième variation ;
   D. la détection de la particule accolée lorsque le déphasage $\phi_i$ n'est pas constant en fonction des longueurs d'onde du rayonnement incident $\lambda_i$ i∈[1,m].

2. Méthode selon la revendication précédente, dans laquelle dans l'étape B, une identification du premier et du deuxième pixel est réalisée par traitement d'image en comparant l'intensité des pixels d'une image Ii associée à une longueur d'onde $\lambda_i$.

3. Méthode selon la revendication 1 ou 2, dans laquelle dans l'étape C, la détermination de l'évolution du déphasage $\phi_i$ comprend la détermination d'une fonction $fn_p$ représentant les longueurs d'onde $\lambda_{max,P}$ des maximums locaux de la deuxième variation en fonction des longueurs d'onde $\lambda_{max,BG}$ des maximums locaux de la première variation.

4. Méthode selon l'une quelconque des revendications précédentes, dans laquelle lesdites longueurs d'onde distinctes $\lambda_i$ i∈[1,m] sont comprises entre une longueur d'onde inférieure $\lambda_{inf}$ pour laquelle une partie réelle de l'indice de réfraction de la particule est minimum sur ladite région spectrale, et une longueur d'onde supérieure $\lambda_{sup}$, pour laquelle une partie réelle de l'indice de réfraction de la particule est maximum sur la région spectrale.

5. Méthode selon la revendication précédente, dans laquelle la pluralité de longueurs d'onde distinctes $\lambda_i$ i∈[1,m], comprend une première pluralité de longueurs d'onde et une deuxième pluralité de longueurs d'onde, ladite première pluralité de longueur d'onde étant comprise dans un intervalle spectral tel quel [$\lambda_{inf}$, $\frac{\lambda_{res}+\lambda_{inf}}{2}$] et la deuxième pluralité de longueur d'onde étant comprise dans un intervalle spectral tel que [ $\frac{\lambda_{res}+\lambda_{sup}}{2}$ ; $\lambda_{sup}$].

6. Méthode selon la revendication 4, dans laquelle, dans l'étape A, la pluralité de longueur d'onde distinctes $\lambda_i$ i∈[1,m] est choisie, de manière à ce que les longueurs d'onde sont réparties sur l'ensemble d'une portion de ladite région spectrale comprise entre la longueur d'onde inférieure $\lambda_{inf}$ et la longueur d'onde supérieure $\lambda_{sup}$.

7. Méthode selon l'une quelconque des revendications précédentes, dans laquelle ledit élément interférométrique est adapté pour que, pour une épaisseur prédéterminée $e_{30}$ de particules (P) accolées et traversées par le rayonnement incident, le contraste de la deuxième variation soit nul ou sensiblement nul sur une plage spectrale incluse dans la région spectrale.

8. Dispositif de détection (D) d'au moins une particule (P) prédéterminée, ladite particule possédant un indice de réfraction $n_3$ et une raie d'absorption à une longueur d'onde de résonance $\lambda_{res}$, ladite raie d'absorption induisant une variation de l'indice de réfraction sur une région spectrale $\Delta\lambda|_{\lambda res}$, ledit dispositif comprenant :

    - une source de lumière (SL) cohérente, accordable en longueur d'onde et adaptée pour émettre un rayonnement incident ($L_{in}$) cohérent à une pluralité de longueurs d'onde distinctes $\lambda_i$ i∈[1,m], configurée pour émettre successivement lesdites longueurs d'onde, lesdites longueurs d'ondes étant comprises dans ladite région spectrale ;
    - un élément interférométrique (EI) agencé de manière à être illuminé par le rayonnement incident ($L_{in}$) et comprenant au moins une couche dite mince (CM) disposée au dessus d'une couche dite substrat (Sub), toutes les deux transparentes dans ladite région spectrale, ladite particule étant accolée à une surface (Sm) de ladite couche mince, un indice de réfraction $n_2$ et une épaisseur $e_2$ de la couche mince étant tel que l'élément interférométrique (EI) forme une cavité Fabry-Pérot avec ou sans particule (P) accolée et génère une inversion du contraste entre des franges issues du Fabry-Pérot sans particules accolées et des franges issues du Fabry-Pérot avec particules accolées , avec:

$$0.8 \times \frac{\lambda_{res}}{4n_1} < e_2 < 1.2 \times \frac{\lambda_{res}}{4n_1},$$

et $\sqrt{n_1} < n_2 < 1.5\sqrt{n_1}$ avec $n_1$ un indice de réfraction du substrat ;
    - un capteur matriciel (Det) adapté pour détecter une image comprennant une première portion ($P_1$) issue de la détection du rayonnement incident transmis ($L_{TBG}$) par l'élément interférométrique seul et une deuxième portion ($P_2$) issue de la détection du rayonnement incident transmis ($L_{TP}$) par l'élement interférométrique et une particule quelconque (O, P) accolée à une surface (Sm) de ladite couche mince, des pixels de la première portion présentant une intensité différente de celles des pixels de la deuxième portion;
    - un processeur (UT) relié au capteur et configuré :

        - pour calculer, en fonction des longueurs d'onde du rayonnement incident $\lambda_i$ i∈[1,m], la variation d'intensité d'au moins un premier pixel de la première portion, dite première variation ($F_{BG}$) et d'au moins un deuxième pixel de la deuxième portion, dite deuxième variation (Fp),
        - pour déterminer une évolution, en fonction des longueurs d'onde du rayonnement incident $\lambda_i$ i∈[1,m], d'un déphasage $\phi_i$ entre la première variation et la deuxième variation ;
        - pour détecter la particule accolée lorsque le déphasage $\phi_i$ n'est pas constant en fonction des longueurs d'onde du rayonnement incident $\lambda_i$ i∈[1,m].

9. Dispositif selon la revendication précédente, dans lequel l'indice de de réfraction $n_2$ de la couche mince est tel que tel que $1.10\sqrt{n_1} < n_2 < 1.35\sqrt{n_1}$.

10. Dispositif selon la revendication 8, dans lequel un matériau de la couche mince est identique au matériau du substrat et dans lequel ladite surface de la couche mince est structurée de manière à ce que l'indice effectif de la couche mince perçu par le rayonnement incident soit tel que

$$\sqrt{n_1} < n_2 < 1.5\sqrt{n_1}.$$

**11.** Dispositif selon l'une quelconque des revendications 8 à 10, dans lequel l'épaisseur $e_2$ de la couche mince est adaptée pour que, pour une épaisseur prédéterminée $e_{30}$ de particules accolées et traversées par le rayonnement incident, le contraste de la deuxième variation soit nul ou sensiblement nul sur une plage spectrale incluse dans la région spectrale.

**12.** Dispositif selon l'une quelconque des revendications 8, 9, 11, dans lequel la couche mince est en ZnS, ZnSe, CdSe, SiN, AIN, Ta2O5, TiO2, ZrO2 et le substrat est en Si ou Ge.

**13.** Procédé de fabrication d'un élément interférométrique (EI) pour dispositif de détection comprenant un élément interférométrique (EI) comprenant au moins, une couche dite mince (CM) disposée au dessus d'une couche dite substrat (Sub), ledit procédé comprenant une phase de conception dudit élément interférométrique et une étape de fabrication matérielle dudit élément interférométrique ainsi conçu **caractérisé en ce que** la phase de conception comprend les étapes suivantes :

A. la sélection d'au moins une particule (P) à détecter présentant une raie d'absorption à une longueur d'onde de résonance $\lambda_{res}$, la couche mince et le substrat étant transparentes dans une région spectrale de variation de l'indice de réfraction induite par la raie d'absorption;

B. la sélection d'un substrat d'indice de réfraction $n_1$ ;

C. la détermination d'une épaisseur $e_2$ et d'un indice de réfraction $n_2$ de la couche mince verifiant les conditions suivantes à la longueur d'onde de résonance :

$$0.8 \times \frac{\lambda_{res}}{4n_1} < e_2 < 1.2 \times \frac{\lambda_{res}}{4n_1} \qquad \text{et} \qquad \sqrt{n_1} < n_2 < 1.5\sqrt{n_1},$$

et

- l'élément interférométrique (EI) forme une cavité Fabry-Pérot avec ou sans particule P accolée et génère une inversion du contraste entre des franges issues du Fabry-Pérot sans particules accolées et des franges issues du Fabry-Pérot avec particules accolées.

**14.** Procédé de fabrication selon la revendication précédente, dans laquelle ladite longueur d'onde de résonance $\lambda_{res}$ est comprise entre $3\mu m$ et $12\mu m$, et dans laquelle la ou les particules à détecter sont des particules d'explosifs ou des biomolécules.

**Patentansprüche**

**1.** Verfahren zum Detektieren mindestens eines vorbestimmten Partikels (P), wobei die Partikel einen Brechungsindex $n_3$ und eine Absorptionslinie bei einer Resonanzwellenlänge $\lambda_{res}$ haben, wobei die Absorptionslinie eine Änderung des Brechungsindex über einen Spektralbereich induziert, wobei das Verfahren die folgenden Schritte beinhaltet:

A. Emittieren einer kohärenten einfallenden Strahlung ($L_{in}$) mit einer Vielzahl von verschiedenen Wellenlängen $\lambda_i$ $i\in[1,m]$, nacheinander eine nach der anderen, wobei die Wellenlängen in dem Spektralbereich liegen; für jedes $i\in[1,m]$ werden die folgenden Schritte durchgeführt:

- A1: Beleuchten, durch die einfallende Strahlung ($L_{in}$) mit der Wellenlänge $\lambda_i$, eines interferometrischen Elements (EI), das mindestens zwei übereinanderliegende Schichten umfasst, eine sogenannte Dünnschicht (CM), die über einer sogenannten Substratschicht (Sub) angeordnet ist, die beide für die Wellenlänge $\lambda_i$ transparent sind, wobei das Partikel an eine Oberfläche (Sm) der Dünnschicht angelagert ist, wobei ein Brechungsindex $n_2$ und eine Dicke $e_2$ der Dünnschicht so sind, dass das interferometrische Element (EI) einen Fabry-Perot-Hohlraum mit oder ohne angelagertes Partikel (P) bildet und eine Umkehr des Kontrasts zwischen Fabry-Perot-Streifen ohne angelagerte Partikel und Fabry-Perot-Streifen mit angelagerten Partikeln erzeugt, mit:

$$0.8 \times \frac{\lambda_{res}}{4n_1} < e_2 < 1.2 \times \frac{\lambda_{res}}{4n_1}$$

und $\sqrt{n_1} < n_2 < 1,5\sqrt{n_1}$ , wobei $n_1$ ein Brechungsindex des Substrats ist;

- A2: Erfassen, durch einen Matrixsensor, eines Bildes $I_i$ mit einem ersten Teil ($P_1$), der aus der Detektion der durchgelassenen einfallenden Strahlung ($L_{TBG}$) durch das interferometrische Element allein resultiert, und einem zweiten Teil ($P_2$), der aus der Detektion der durchgelassenen einfallenden Strahlung ($L_{TP}$, $L_{TO}$) durch das interferometrische Element und ein beliebiges an eine Oberfläche (Sm) der Dünnschicht angelagertes Partikel (O, P) resultiert, wobei Pixel des ersten Teils eine andere Intensität aufweisen als Pixel des zweiten Teils;

B. Berechnen der Intensitätsänderung in Abhängigkeit von den Wellenlängen der einfallenden Strahlung $\lambda_i$ $i \in [1,m]$ von mindestens einem ersten Pixel des ersten Teils, erste Änderung ($F_{BG}$) genannt, und von mindestens einem zweiten Pixel des zweiten Teils, zweite Änderung (Fp) genannt;

C. Bestimmen eines Verlaufs, in Abhängigkeit von den Wellenlängen der einfallenden Strahlung $\lambda_i$ $i \in [1,m]$, einer Phasenverschiebung $\phi_i$ zwischen der ersten Änderung und der zweiten Änderung;

D. Detektieren des angelagerten Partikels, wenn die Phasenverschiebung $\phi_i$ in Abhängigkeit von den Wellen-längen der einfallenden Strahlung $\lambda_i$ $i \in [1,m]$ nicht konstant ist.

2. Verfahren nach dem vorherigen Anspruch, bei dem in Schritt B eine Identifizierung des ersten und des zweiten Pixels durch Bildverarbeitung durch Vergleichen der Intensität der Pixel eines mit einer Wellenlange $\lambda_i$ assoziierten Bildes Ii erfolgt.

3. Verfahren nach Anspruch 1 oder 2, bei dem in Schritt C das Bestimmen des Verlaufs der Phasenverschiebung $\phi_i$ das Bestimmen einer Funktion $fn_p$ beinhaltet, die die Wellenlängen $\lambda_{max,P}$ der lokalen Maxima der zweiten Änderung in Abhängigkeit von den Wellenlängen $\lambda_{max,BG}$ der lokalen Maxima der ersten Änderung darstellt.

4. Verfahren nach einem der vorherigen Ansprüche, bei dem die verschiedenen Wellenlängen $\lambda_i$ $i \in [1,m]$ zwischen einer unteren Wellenlänge $\lambda_{inf}$, bei der ein realer Teil des Brechungsindex des Partikels über den Spektralbereich minimal ist, und einer oberen Wellenlänge $\lambda_{sup}$ liegen, bei der ein realer Teil des Brechungsindex des Partikels über den Spektralbereich maximal ist.

5. Verfahren nach dem vorherigen Anspruch, bei dem die Vielzahl von verschiedenen Wellenlängen $\lambda_i$ $i \in [1,m]$ eine erste Vielzahl von Wellenlängen und eine zweite Vielzahl von Wellenlängen umfassen, wobei die erste Vielzahl von Wellenlängen in einem Spektralbereich wie [$\lambda_{inf}$, $\frac{\lambda_{res}+\lambda_{inf}}{2}$ ] liegt und die zweite Vielzahl von Wellenlängen in einem Spektralbereich wie [ $\frac{\lambda_{res}+\lambda_{sup}}{2}$ ; $\lambda_{sup}$] liegt.

6. Verfahren nach Anspruch 4, bei dem in Schritt A die Vielzahl von verschiedenen Wellenlängen $\lambda_i$ $i \in [1,m]$ so gewählt werden, dass die Wellenlängen über die Gesamtheit eines Teils des Spektralbereichs zwischen der unteren Wel-lenlänge $\lambda_{inf}$ und der oberen Wellenlänge $\lambda_{sup}$ verteilt sind.

7. Verfahren nach einem der vorherigen Ansprüche, bei dem das interferometrische Element so ausgelegt ist, dass für eine vorbestimmte Dicke $e_{30}$ von angelagerten und von der einfallenden Strahlung durchquerten Partikeln (P) der Kontrast der zweiten Änderung über ein in dem Spektralbereich eingeschlossenes Spektralband null oder im Wesentlichen null ist.

8. Gerät (D) zum Detektieren mindestens eines vorbestimmten Partikels (P), wobei das Partikel einen Brechungsindex $n_3$ und eine Absorptionslinie bei einer Resonanzwellenlänge $\lambda_{res}$ hat, wobei die Absorptionslinie eine Änderung des Brechungsindex über einen Spektralbereich $\Delta\lambda|_{\lambda res}$ induziert, wobei das Gerät Folgendes umfasst:

- eine kohärente Lichtquelle (SL), die wellenlängenabstimmbar und zum Emittieren einer kohärenten einfallen-den Strahlung ($L_{in}$) mit einer Vielzahl von verschiedenen Wellenlängen $\lambda_i \in [1,m]$ ausgelegt ist, konfiguriert zum Emittieren der Wellenlängen nacheinander, wobei die Wellenlängen in dem Spektralbereich enthalten sind;
- ein interferometrisches Element (EI), das zum Beleuchten durch die einfallende Strahlung ($L_{in}$) ausgelegt ist und mindestens eine sogenannte Dünnschicht (CM) umfasst, die über einer sogenannten Substratschicht (Sub) angeordnet ist, die beide in dem Spektralbereich transparent sind, wobei das Partikel an eine Oberfläche (Sm) der Dünnschicht angelagert ist, wobei ein Brechungsindex $n_2$ und eine Dicke $e_2$ der Dünnschicht derart sind, dass das interferometrische Element (EI) einen Fabry-Perot-Hohlraum mit oder ohne angelagertes Partikel (P) bildet und eine Umkehr des Kontrasts zwischen Fabry-Perot-Streifen ohne angelagerte Partikel und Fabry-Perot-Streifen ohne angelagerte Partikel erzeugt, mit:

$$0,8 \times \frac{\lambda_{res}}{4n_1} < e_2 < 1,2 \times \frac{\lambda_{res}}{4n_1},$$

und $\sqrt{n_1} < n_2 < 1,5\sqrt{n_1}$ , wobei $n_1$ ein Brechungsindex des Substrats ist;
- einen Matrixsensor (Det), ausgelegt zum Detektieren eines Bildes mit einem ersten Teil ($P_1$), der aus der Detektion der durchgelassenen einfallenden Strahlung ($L_{TBG}$) durch das interferometrische Element allein resultiert, und einem zweiten Teil ($P_2$), der aus der Detektion der durchgelassenen einfallenden Strahlung ($L_{TP}$) durch das interferometrische Element und ein beliebiges an eine Oberfläche (Sm) der Dünnschicht angelagertes Partikel (O, P) resultiert, wobei die Pixel des ersten Teils eine andere Intensität aufweisen als die Pixel des zweiten Teils;
- einen Prozessor (UT), der mit dem Sensor verbunden und konfiguriert ist zum:
- Berechnen, in Abhängigkeit von den Wellenlängen der einfallenden Strahlung $\lambda_i$ i∈[1,m], der Intensitätsänderung von mindestens einem ersten Pixel des ersten Teils, erste Änderung ($F_{BG}$) genannt, und von mindestens einem zweiten Pixel des zweiten Teils, zweite Änderung (Fp) genannt,
- Bestimmen eines Verlaufs, in Abhängigkeit von den Wellenlängen der einfallenden Strahlung $\lambda_1$ i∈[1,m], einer Phasenverschiebung $\phi_i$ zwischen der ersten Änderung und der zweiten Änderung;
- Detektieren des angelagerten Partikels, wenn die Phasenverschiebung $\phi_i$ in Abhängigkeit von den Wellenlängen der einfallenden Strahlung $\lambda_i$ i∈[1,m] nicht konstant ist.

9. Gerät nach dem vorherigen Anspruch, wobei der Brechungsindex $n_2$ der Dünnschicht so ist, dass $1,10\sqrt{n_1} < n_2 < 1,35\sqrt{n_1}$ .

10. Gerät nach Anspruch 8, wobei ein Material der Dünnschicht mit dem Material des Substrats identisch ist und wobei die Oberfläche der Dünnschicht so strukturiert ist, dass der effektive Index der von der einfallenden Strahlung wahrgenommenen Dünnschicht so ist, dass $\sqrt{n_1} < n_2 < 1,5\sqrt{n_1}$ .

11. Gerät nach einem der Ansprüche 8 bis 10, wobei die Dicke $e_2$ der Dünnschicht so ausgelegt ist, dass für eine vorbestimmte Dicke $e_{30}$ von angelagerten und von der einfallenden Strahlung durchquerten Partikel der Kontrast der zweiten Änderung über einen in dem Spektralbereich eingeschlossenen Spektralband null oder im Wesentlichen null ist.

12. Vorrichtung nach einem der Ansprüche 8, 9, 11, wobei die Dünnschicht aus ZnS, ZnSe, CdSe, SiN, AlN, Ta2O5, TiO2, ZrO2 besteht und das Substrat aus Si oder Ge ist.

13. Verfahren zur Herstellung eines interferometrischen Elements (EI) für ein Detektionsgerät, das ein interferometrisches Element (EI) mit mindestens einer sogenannten Dünnschicht (CM) umfasst, die über einer sogenannten Substratschicht (Sub) angeordnet ist, wobei das Verfahren eine Phase des Konzipierens des interferometrischen Elements und einen Schritt des materiellen Herstellens des so konzipierten interferometrischen Elements beinhaltet, **dadurch gekennzeichnet, dass** die Konzeptionsphase die folgenden Schritte beinhaltet:

A. Auswählen mindestens eines zu detektierenden Partikels (P), das eine Absorptionslinie bei einer Resonanzwellenlänge $\lambda_{res}$ aufweist, wobei die Dünnschicht und das Substrat in einem Spektralbereich der durch die Absorptionslinie induzierten Änderung des Brechungsindex transparent sind;
B. Auswählen eines Substrats mit einem Brechungsindex $n_1$;

C. Bestimmen einer Dicke $e_2$ und eines Brechungsindex $n_2$ der Dünnschicht, die die folgenden Bedingungen bei der Resonanzwellenlänge erfüllen: $0,8 \times \frac{\lambda_{res}}{4n_1} < e_2 < 1,2 \times \frac{\lambda_{res}}{4n_1}$ und $\sqrt{n_1} < n_2 < 1,5\sqrt{n_1}$ , und

- das interferometrische Element (EI) bildet einen Fabry-Perot-Hohlraum mit oder ohne angelagerte Partikel P und erzeugt eine Umkehr des Kontrasts zwischen ) Fabry-Perot-Streifen ohne angelagerte Partikel und Fabry-Perot-Streifen mit angelagerten Partikeln.

14. Herstellungsverfahren nach dem vorherigen Anspruch, wobei die Resonanzwellenlänge $\lambda_{res}$ zwischen 3 $\mu m$ und 12 $\mu m$ liegt und wobei es sich bei dem oder den zu detektierenden Partikel(n) um Sprengstoffpartikel oder Biomoleküle handelt.

**Claims**

1. A method for detecting at least one predetermined particle (P), said particles having a refractive index $n_3$ and an absorption line at a resonance wavelength $\lambda_{res}$, said absorption line inducing a variation of the refractive index over a spectral region, said method comprising the following steps:

   A. emission of a coherent incident radiation ($L_{in}$) at a plurality of distinct wavelengths $\lambda_i$ $i \in [1,m]$, in succession one by one, said wavelengths lying within said spectral region;
   for each $i \in [1,m]$, the following steps are performed:

   - A1: illumination, by the incident radiation ($L_{in}$) at the wavelength $\lambda_i$, of an interferometric element (EI) comprising at least two superposed layers, a so-called thin layer (CM), disposed on top of a so-called substrate layer (Sub), both transparent to the wavelength $\lambda_i$, said particle being attached to a surface (Sm) of said thin layer, a refractive index $n_2$ and a thickness $e_2$ of the thin layer being such that the interferometric element (EI) forms a Fabry-Pérot cavity with or without attached particle (P) and generates an inversion of the contrast between Fabry-Pérot fringes without attached particles and Fabry-Pérot fringes with attached particles, where:

   $$0.8 \times \frac{\lambda_{res}}{4n_1} < e_2 < 1.2 \times \frac{\lambda_{res}}{4n_1}$$

   and $\sqrt{n_1} < n_2 < 1.5\sqrt{n_1}$ , with $n_1$ being a refractive index of the substrate;
   - A2: acquisition, by a matrix sensor, of an image $I_i$ comprising a first portion ($P_1$) deriving from the detection of the incident radiation transmitted ($L_{TBG}$) by the interferometric element alone and a second portion ($P_2$) deriving from the detection of the incident radiation transmitted ($L_{TP}$, $L_{TO}$) by the interferometric element and any particle (O, P) attached to a surface (Sm) of said thin layer, pixels of the first portion exhibiting an intensity that is different from those of the pixels of the second portion;

   B. calculation of the variation of intensity, as a function of the wavelengths of the incident radiation $\lambda_i$ $i \in [1,m]$, of at least one first pixel of the first portion, called first variation ($F_{BG}$) and of at least one second pixel of the second portion, called second variation ($F_P$);
   C. determination of a trend, as a function of the wavelengths of the incident radiation $\lambda_i$ $i \in [1,m]$, of a phase shift $\phi_i$ between the first variation and the second variation;
   D. detection of the attached particle when the phase shift $\phi_i$ is not constant as a function of the wavelengths of the incident radiation $\lambda_i$ $i \in [1,m]$.

2. The method according to the preceding claim, wherein, in step B, an identification of the first pixel and of the second pixel is performed by image processing by comparing the intensity of the pixels of an image $I_i$ associated with a wavelength $\lambda_i$.

3. The method according to claim 1 or 2, wherein, in step C, the determination of the trend of the phase shift $\phi_i$ comprises the determination of a function $fn_p$ representing the wavelengths $\lambda_{max,P}$ of the local maxima of the second variation as a function of the wavelengths $\lambda_{max,BG}$ of the local maxima of the first variation.

4. The method according to any one of the preceding claims, wherein said distinct wavelengths $\lambda_i$ i∈[1,m] lie between a lower wavelength $\lambda_{inf}$ for which a real part of the refractive index of the particle is minimum over said spectral region, and an upper wavelength $\lambda_{sup}$, for which a real part of the refractive index of the particle is maximum over the spectral region.

5. The method according to the preceding claim, wherein the plurality of distinct wavelengths $\lambda_i$ i∈[1,m] comprises a first plurality of wavelengths and a second plurality of wavelengths, said first plurality of wavelengths lying within a spectral interval such as $[\lambda_{inf}; \frac{\lambda_{res}+\lambda_{inf}}{2}]$ and the second plurality of wavelengths lying within a spectral interval such as $[\frac{\lambda_{res}+\lambda_{sup}}{2}; \lambda_{sup}]$.

6. The method according to claim 4, wherein, in step A, the plurality of distinct wavelengths $\lambda_i$ i∈[1,m] is chosen such that the wavelengths are distributed over all of a portion of said spectral region lying between the lower wavelength $\lambda_{inf}$ and the upper wavelength $\lambda_{sup}$.

7. The method according to any one of the preceding claims, wherein said interferometric element is adapted so that, for a predetermined thickness $e_{30}$ of particles (P) attached and passed through by the incident radiation, the contrast of the second variation is nil or substantially nil over a spectral band included within the spectral region.

8. A device (D) for detecting at least one predetermined particle (P), said particle having a refractive index $n_3$ and an absorption line at a resonance wavelength $\lambda_{res}$, said absorption line inducing a variation of the refractive index over a spectral region $\Delta\lambda|_{\lambda res}$, said device comprising:

- a coherent light source (SL), wavelength-tunable and adapted to emit a coherent incident radiation ($L_{in}$) at a plurality of distinct wavelengths $\lambda_i$ i∈[1,m], configured to successively emit said wavelengths, said wavelengths lying within said spectral region;
- an interferometric element (EI) arranged so as to be illuminated by the incident radiation ($L_{in}$) and comprising at least one so-called thin layer (CM) disposed on top of a so-called substrate layer (Sub), both transparent in said spectral region, said particle being attached to a surface (Sm) of said thin layer, a refractive index $n_2$ and a thickness $e_2$ of the thin layer being such that the interferometric element (EI) forms a Fabry-Pérot cavity with or without attached particle P and generates an inversion of the contrast between Fabry-Pérot fringes without attached particles and Fabry-Pérot fringes with attached particles, where:

$$0.8 \times \frac{\lambda_{res}}{4n_1} < e_2 < 1.2 \times \frac{\lambda_{res}}{4n_1},$$

and $\sqrt{n_1} < n_2 < 1.5\sqrt{n_1}$, with $n_1$ being a refractive index of the substrate;
- a matrix sensor (Det) adapted to detect an image comprising a first portion (P$_1$) deriving from the detection of the incident radiation transmitted ($L_{TBG}$) by the interferometric element alone and a second portion (P$_2$) deriving from the detection of the incident radiation transmitted ($L_{TP}$) by the interferometric element and any particle (O, P) attached to a surface (Sm) of said thin layer, pixels of the first portion exhibiting an intensity that is different from those of the pixels of the second portion;
- a processor (UT) linked to the sensor and configured:
- to calculate, as a function of wavelengths of the incident radiation $\lambda_i$ i∈[1,m], the variation of intensity of at least one first pixel of the first portion, called first variation ($F_{BG}$) and of at least one second pixel of the second portion, called second variation ($F_P$),
- to determine a trend, as a function of the wavelengths of the incident radiation $\lambda_i$ i∈[1,m], of a phase shift $\phi_i$ between the first variation and the second variation;
- to detect the attached particle when the phase shift $\phi_i$ is not constant as a function of the wavelengths of the incident radiation $\lambda_i$ i∈[1,m].

9. The device according to the preceding claim, wherein the refractive index $n_2$ of the thin layer is such that

$$1.10\sqrt{n_1} < n_2 < 1.35\sqrt{n_1}.$$

10. The device according to claim 8, wherein a material of the thin layer is identical to the material of the substrate and wherein said surface of the thin layer is structured such that the effective index of the thin layer perceived by the incident radiation is such that $\sqrt{n_1} < n_2 < 1.5\sqrt{n_1}$.

11. The device according to any one of claims 8 to 10, wherein the thickness $e_2$ of the thin layer is adapted so that, for a predetermined thickness $e_{30}$ of particles attached and passed through by the incident radiation, the contrast of the second variation is nil or substantially nil over a spectral band included in the spectral region.

12. The device according to any one of claims 8, 9, 11, wherein the thin layer is made of ZnS, ZnSe, CdSe, SiN, AlN, Ta2O5, TiO2, ZrO2 and the substrate is made of Si or Ge.

13. A method for manufacturing an interferometric element (EI) for a detection device comprising an interferometric element (EI) comprising at least one so-called thin layer (CM) disposed on top of a so-called substrate layer (Sub), said method comprising a phase of design of said interferometric element and a step of material production of said thus designed interferometric element, **characterised in that** the design phase comprises the following steps:

A. selection of at least one particle (P) to be detected exhibiting an absorption line at a resonance wavelength $\lambda_{res}$, the thin layer and the substrate layer being transparent in a spectral region of variation of the refractive index, variation which is induced by the absorption line;

B. selection of a substrate of refractive index $n_1$;

C. determination of a thickness $e_2$ and of a refractive index $n_2$ of the thin layer satisfying the following conditions at the resonance wavelength:

$$0.8 \times \frac{\lambda_{res}}{4n_1} < e_2 < 1.2 \times \frac{\lambda_{res}}{4n_1} \text{ and } \sqrt{n_1} < n_2 < 1.5\sqrt{n_1}, \text{ and}$$

- the interferometric element (EI) forms a Fabry-Pérot cavity with or without attached particle P and generates an inversion of the contrast between the Fabry-Pérot fringes without attached particles and the Fabry-Pérot fringes with attached particles.

14. The manufacturing method according to the preceding claim, wherein said resonance wavelength $\lambda_{res}$ lies between 3 $\mu m$ and 12 $\mu m$, and wherein the particle or particles to be detected are explosive particles or biomolecules.

FIG.1

FIG.2

FIG.3

FIG.4A

FIG.4B

FIG.5

FIG.6

```
┌─────────────────────────────────────┐
│  Émettre rayonnement incident à une │
│  pluralité de longueurs d'onde λᵢ   │────── A
│  successivement                     │
└─────────────────────────────────────┘
                  │
                  ▼
┌─────────────────────────────────────┐
│  Illuminer élément interférométrique│────── A1
│  avec rayonnement incident à λᵢ     │
└─────────────────────────────────────┘
                  │
                  ▼                          ── A2
┌─────────────────────────────────────┐
│                                     │
│  Acquérir image Iᵢ du rayonnement   │
│  transmis                           │
│                                     │
└─────────────────────────────────────┘
┌──────────┐     │
│  i =i+1  │     │  i = m
└──────────┘     ▼
┌─────────────────────────────────────┐
│  Calcul de la première variation F_BG│
│  et deuxième variation F_P en fonction│
│  de λᵢ i∈[1,m]                      │
└─────────────────────────────────────┘
        B         │
                  ▼
┌─────────────────────────────────────┐
│  Détermination évolution déphasage  │
│  φᵢ en fonction des longueurs d'onde │────── C
│  du rayonnement incident λᵢ i∈[1,m] │
└─────────────────────────────────────┘
                  │
                  │  φᵢⱼ ≠ cste(λᵢ), i∈[1,m])
                  ▼
┌─────────────────────────────────────┐
│  Présence de particules P           │
│  accolées à l'élément               │────── D
│  interférométrique                  │
└─────────────────────────────────────┘
```

Émettre rayonnement incident à une pluralité de longueurs d'onde $\lambda_i$ successivement — A

Illuminer élément interférométrique avec rayonnement incident à $\lambda_i$ — A1

— A2

Acquérir image $I_i$ du rayonnement transmis

i =i+1

i = m

Calcul de la première variation $F_{BG}$ et deuxième variation $F_P$ en fonction de $\lambda_i$ i∈[1,m]

B

Détermination évolution déphasage $\phi_i$ en fonction des longueurs d'onde du rayonnement incident $\lambda_i$ i∈[1,m] — C

$\phi_{ij} \neq \mathrm{cste}(\lambda_i), i∈[1,m])$

Présence de particules P accolées à l'élément interférométrique — D

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011014282 A2